# EUROPÄISCHE PATENTANMELDUNG

(11) **EP 3 498 382 A1**
(43) Veröffentlichungstag der Anmeldung: **19.06.2019**
(21) Anmeldenummer: 18211816.6
(22) Anmeldetag: 12.12.2018
(51) Int. Cl.: B05D 1/18, B65G 49/04, C25D 13/00, C25D 13/22, B05C 3/10

(54) **TAUCHBEHANDLUNGSANLAGE UND VERFAHREN ZUM BEHANDELN VON GEGENSTÄNDEN**

(30) Priorität: 14.12.2017 DE 102017129944
(71) Anmelder: Eisenmann SE, 71032 Böblingen (DE)
(72) Erfinder: Huber, Jochen, 71093 Weil im Schönbuch (DE)
(74) Vertreter: Ostertag & Partner Patentanwälte mbB

(57) **Zusammenfassung**

Die Erfindung betrifft eine Tauchbehandlungsanlage (10) zum Behandeln von Gegenständen (12), insbesondere zum Behandeln von Fahrzeugkarosserien (14), wobei die Tauchbehandlungsanlage (10) mindestens ein Tauchbecken (16) mit einer Behandlungsflüssigkeit (18) und ein Transportsystem (20) aufweist, wobei zu behandelnde Gegenstände (12) vollständig oder teilweise in die Behandlungsflüssigkeit (18) eingetaucht werden können, wobei das Transportsystem (20) die zu behandelnden Gegenstände (12) an das Tauchbecken (16) heran, vollständig oder teilweise in den Innenraum (22) des Tauchbeckens (16) hinein, aus dem Tauchbecken heraus und von diesem weg bewegen kann, wobei die Tauchbehandlungsanlage (10) mindestens eine Abstreifvorrichtung (60a, 60b, 62) aufweist, mit Hilfe derer Schaum von der Behandlungsflüssigkeit (18) abgestreift werden kann. Die Erfindung betrifft auch ein Verfahren zum Behandeln von Gegenständen (12), insbesondere zum Behandeln von Fahrzeugkarosserien (14), bei dem zu behandelnde Gegenstände (12) vollständig oder teilweise in eine Behandlungsflüssigkeit (18) eingetaucht werden, mit welcher mindestens ein Tauchbecken (16) gefüllt ist, wobei an einer Oberfläche (58) der Behandlungsflüssigkeit (18) vorhandener Schaum mittels mindestens einer Abstreifvorrichtung (60a, 60b, 62) abgestreift wird. Erfindungsgemäß kann auf der Behandlungsflüssigkeit (18) schwimmender Schaum derart abgeführt werden, dass Qualitätseinbußen an der behandelten Oberfläche des Gegenstands (12) durch Anhaften von Schaum beim Austauchen des Gegenstands (12) aus der Behandlungsflüssigkeit (18) zumindest weitgehend vermieden werden.

## Beschreibung

Die Erfindung betrifft eine Tauchbehandlungsanlage zum Behandeln von Gegenständen, insbesondere zum Behandeln von Fahrzeugkarosserien, mit mindestens einem Tauchbecken, welches mit einer Behandlungsflüssigkeit füllbar ist, in welche zu behandelnde Gegenstände vollständig oder teilweise eingetaucht werden können, und mit einem Transportsystem, welches die zu behandelnden Gegenstände an das Tauchbecken heran, vollständig oder teilweise in den Innenraum des Tauchbeckens hinein, aus dem Tauchbecken heraus und von diesem weg bewegen kann, wobei das Transportsystem mit mindestens einer Befestigungseinrichtung ausgestattet ist, an der wenigstens ein Gegenstand befestigbar ist.

Außerdem betrifft die Erfindung ein Verfahren zum Behandeln von Gegenständen, insbesondere zum Behandeln von Fahrzeugkarosserien, bei dem zu behandelnde Gegenstände vollständig oder teilweise in eine Behandlungsflüssigkeit eingetaucht werden, mit welcher mindestens ein Tauchbecken gefüllt ist.

Die DE 10 2009 017 151 A1 beschreibt eine Anlage zur Tauchbehandlung von Gegenständen, insbesondere von Fahrzeugkarosserien, mit mindestens einem Tauchbecken, das bis zu einem bestimmten Spiegel mit Behandlungsflüssigkeit füllbar ist, beispielsweise mit flüssigem Lack, und mit einem Fördersystem, mit dessen Hilfe die zu behandelnden Gegenstände an das Tauchbecken heran, in dieses hinein, aus diesem heraus und von diesem weg beförderbar sind.

In der DE 103 13 205 A1 wird eine Anlage zur Behandlung eines Substrats in einem Tauchbad offenbart, umfassend ein Tauchbecken, in dem zum Beispiel Fahrzeugkarosserien eine kathodische Tauchlackbeschichtung erhalten, wobei das Tauchbecken ein Prozessmedium aufnimmt und wenigstens eine geneigte Beckenwand aufweist. Dabei soll durch die geneigte Beckenwand eine unerwünschte Schaumbildung des Prozessmediums im Tauchbecken vermieden bzw. wesentlich verringert werden, um dadurch eine bessere Beschichtung der Karosserien im Tauchbad zu erhalten.

Aufgabe der vorliegenden Erfindung ist es, eine gegenüber dem Stand der Technik weiterentwickelte Tauchbehandlungsanlage bereitzustellen und eine Qualitätssteigerung bei der Tauchbehandlung zu ermöglichen.

Diese Aufgabe wird gelöst durch eine Tauchbehandlungsanlage der eingangs genannten Art, wobei mindestens eine Abstreifvorrichtung vorgesehen ist, um Schaum von der Behandlungsflüssigkeit im Tauchbecken abzustreifen. Derart kann es zumindest weitgehend vermieden werden, dass auf der Behandlungsflüssigkeit aufschwimmender Schaum auf der Oberfläche eines Gegenstands anhaftet und zu einer Qualitätseinbuße an der behandelten Oberfläche des Gegenstands führt, wenn der Gegenstand aus der Behandlungsflüssigkeit austaucht. Die erfindungsgemäße Lösung zeichnet sich durch einen geringen Platzbedarf aus und kann konstruktiv günstig realisiert werden.

In zweckmäßiger Ausgestaltung kann die Abstreifvorrichtung mindestens ein Abstreifelement mit mindestens einer Strömungsfläche aufweisen. Derart kann Schaum mittels der Abstreifvorrichtung beispielsweise an mindestens eine Längsseite des Tauchbeckens geleitet werden.

Es kann vorteilhaft sein, wenn die Abstreifvorrichtung stationär in der Tauchbehandlungsanlage angeordnet ist. Dabei kann die Abstreifvorrichtung beispielsweise mittels einer Halteeinrichtung am Rand des Tauchbeckens befestigt sein.

Vorzugsweise kann die Abstreifvorrichtung klappbar und/oder schwenkbar ausgebildet sein. Derart kann die Abstreifvorrichtung beispielsweise vorübergehend aus der Bewegungsbahn des Gegenstands und/oder der Bewegungsbahn eines dem Gegenstand zugeordneten Transportwagens gebracht werden.

In einer alternativen Ausgestaltung kann die Abstreifvorrichtung mittels des Transportsystems beweglich in der Tauchbehandlungsanlage angeordnet sein. Auf diese Weise kann die Abstreifvorrichtung beispielsweise mittels eines Transportwagens des Transportsystems durch die Tauchbehandlungsanlage bewegt werden.

Gemäß einer vorteilhaften Weiterbildung kann die Abstreifvorrichtung derart angeordnet sein, dass sie gemeinsam mit der mindestens einen Befestigungseinrichtung des Transportsystems bewegt wird. Derart kann die Bewegung der Abstreifvorrichtung an die Bewegung des an der Befestigungseinrichtung befestigten Gegenstands gekoppelt werden.

Es kann von Vorteil sein, wenn die mindestens eine Strömungsfläche höhenverstellbar ist. Derart kann es beispielsweise ermöglicht werden, die Abstreifvorrichtung an unterschiedliche Zustände der Behandlungsflüssigkeit und/oder an andere Gegebenheiten anzupassen.

Es kann zweckmäßig sein, beispielsweise um Schaum zum Rand des Tauchbeckens zu lenken, wenn die mindestens eine Strömungsfläche in einem schrägen Winkel zum Rand des Tauchbeckens angeordnet ist.

Vorzugsweise kann der Winkel der mindestens einen Strömungsfläche zum Rand des Tauchbeckens verstellbar sein. Derart kann beispielsweise die Wirkungsweise der Abstreifvorrichtung an unterschiedliche Gegebenheiten angepaßt werden.

Es kann von Vorteil sein, wenn die Abstreifvorrichtung pflugförmig ausgebildet ist.

Vorzugsweise können an mindestens einer Längsseite des Tauchbeckens ein oder mehrere Saugvorrichtungen und/oder ein oder mehrere Überlaufvorrichtungen angeordnet sein. Derart kann Schaum besonders schnell und zuverlässig abtransportiert werden.

Die der Erfindung zugrundeliegende Aufgabe wird auch gelöst durch ein Verfahren zum Behandeln von Gegenständen, wobei an einer Oberfläche der Behandlungsflüssigkeit vorhandener Schaum mittels mindestens einer Abstreifvorrichtung abgestreift wird. Wesentliche Vorteile des Verfahrens ergeben sich analog zu den Vorteilen der Tauchbehandlungsanlage.

Es kann günstig sein, wenn die zu behandelnden Gegenstände mit einem Transportsystem an das Tauchbecken heran, vollständig oder teilweise in den Innenraum des Tauchbeckens hinein, aus dem Tauchbecken heraus und von diesem weg bewegt werden, und wenn die Gegenstände eine Zeitspanne im Innenraum des Tauchbeckens verweilen, bevor sie wieder aus diesem heraus bewegt werden. Während dieser Zeitspanne kann Schaum entlang mindestens einer Strömungsfläche der Abstreifvorrichtung abströmen.

Mit Vorteil können die Abstreifvorrichtung und eine Befestigungseinrichtung des Transportsystems, an der wenigstens ein Gegenstand befestigt ist, gemeinsam bewegt werden. Derart erfolgt eine Kopplung der Bewegung der Abstreifvorrichtung an die Bewegung der Befestigungseinrichtung und des an ihr befestigten Gegenstands.

Es kann von Vorteil sein, wenn die Gegenstände unterhalb der Abstreifvorrichtung an dieser vorbei bewegt werden.

Weitere vorteilhafte Ausgestaltungen der Erfindung ergeben sich aus der nachfolgenden Beschreibung. Dabei werden Ausführungsbeispiele der Erfindung, ohne hierauf beschränkt zu sein, anhand der Zeichnung näher erläutert. Es zeigen in vereinfachter, schematischer Darstellung:
- Fig. 1: einen Ausschnitt einer Tauchbehandlungsanlage gemäß einem ersten Ausführungsbeispiel in einer Seitenansicht;
- Fig. 2: einen Schnitt durch die Tauchbehandlungsanlage der Fig. 1 in geändertem Maßstab gemäß der Linie II-II von Fig. 1;
- Fig. 3: einen Schnitt durch die Tauchbehandlungsanlage der Fig. 1 in geändertem Maßstab gemäß der Linie III-III von Fig. 1;
- Fig. 4: einen Ausschnitt einer Tauchbehandlungsanlage gemäß einem weiteren Ausführungsbeispiel in einer Seitenansicht;
- Fig. 5: einen Schnitt durch die Tauchbehandlungsanlage der Fig. 4 in geändertem Maßstab gemäß der Linie V-V von Fig. 4;
- Fig. 6: einen Schnitt durch die Tauchbehandlungsanlage der Fig. 4 in geändertem Maßstab gemäß der Linie VI-VI von Fig. 4;

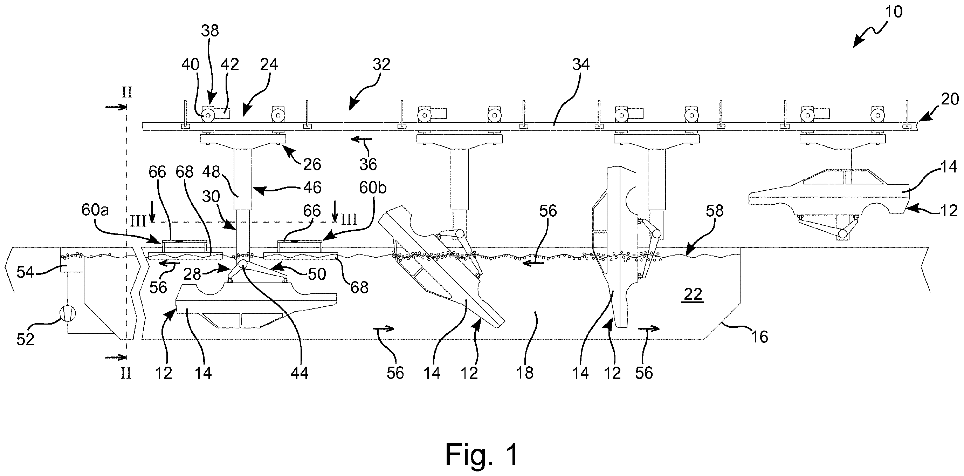

Die Figuren 1 bis 6 zeigen in mehreren Ansichten Ausführungsbeispiele einer Tauchbehandlungsanlage 10 zum Behandeln von Gegenständen 12. Beispielhaft sind als Gegenstände 12 Fahrzeugkarosserien 14 gezeigt, auf welche im Weiteren Bezug genommen wird und bei denen es sich insbesondere um Kraftfahrzeugkarosserien von Personenkraftfahrzeugen, Kraftomnibussen oder Lastkraftfahrzeugen zum Befördern von Personen und/oder Gütern handelt. Die Tauchbehandlungsanlage 10 kann beispielsweise als Anlage zur kathodischen Tauchlackierung (KTL) von Karosserien in der Automobilindustrie ausgebildet sein.

Die Tauchbehandlungsanlage 10 kann ein oder mehrere Tauchbecken 16 umfassen, vorzugsweise für unterschiedliche Tauchbehandlungen, zum Beispiel Reinigen, Phosphatieren, Tauchlackieren und dergleichen.

Die Figuren 1 bis 6 zeigen jeweils einen Abschnitt eines Tauchbeckens 16 einer Tauchbehandlungsanlage 10. In einem derartigen Tauchbecken 16 können beispielsweise in der Automobilindustrie Fahrzeugkarosserien 14 mittels einer kataphoretischen Tauchlackierung mit einem Lack beschichtet werden.

Das Tauchbecken 16 ist mit einer Behandlungsflüssigkeit 18 gefüllt, wobei zu behandelnde Gegenstände 12 vollständig - so dass sich die Gegenstände 12 also vollständig unterhalb des zu erkennenden Flüssigkeitsspiegels befinden - oder teilweise in das Tauchbecken 16 eingetaucht werden können. Die Behandlungsflüssigkeit 18 wird in dem Tauchbecken 16 in an und für sich bekannter Weise umgewälzt, so dass in dem Tauchbecken 16 eine in Längsrichtung des Tauchbeckens 16 umwälzende Strömung entsteht.

Im Falle einer kataphoretischen Tauchlackierung handelt es sich bei der Behandlungsflüssigkeit 18 um einen Lack. Dabei bildet sich zwischen den Fahrzeugkarosserien 14 und Anoden, die entlang des Bewegungsweges der Fahrzeugkarosserien 14 angeordnet sind, ein elektrisches Feld aus, in welchem Lackpartikel auf die Fahrzeugkarosserien 14 zu wandern und an diesen abgeschieden werden. Diese Anoden sind aus Übersichtlichkeitsgründen nicht dargestellt.

Die Fahrzeugkarosserien 14 werden mit Hilfe eines Transportsystems 20 durch die Tauchbehandlungsanlage 10 und insbesondere durch das Tauchbecken 16 und die darin befindliche Behandlungsflüssigkeit 18 geführt. Das Transportsystem 20 ist in der Lage, die zu behandelnden Gegenstände 12 an das Tauchbecken 16 heran, vollständig oder teilweise in den Innenraum 22 des Tauchbeckens 16 hinein, aus dem Tauchbecken 16 heraus und von diesem weg zu bewegen. Der besseren Übersicht halber sind die Bestandteile des Transportsystems 20 nur teilweise mit Bezugszeichen versehen.

Das Transportsystem 20 umfasst eine Vielzahl von Transportwagen 24 mit einem Fahrwerk 26 und einer Befestigungseinrichtung 28, an welcher wenigstens ein Gegenstand 12 befestigt werden kann. Die Befestigungseinrichtung 28 ist mittels einer Verstelleinrichtung 30 mit dem Fahrwerk 26 verbunden.

Das Transportsystem 20 ist bei den vorliegenden Ausführungsbeispielen als Hängebahnsystem 32 ausgebildet, bei dem sich über dem Tauchbecken 16 eine Tragschiene 34 erstreckt. Die Transportrichtung, in welcher die Fahrzeugkarosserien 14 mittels des Transportsystems 20 gefördert werden, ist in den Figuren durch einen Pfeil 36 angedeutet.

Das Fahrwerk 26 ist in an und für sich bekannter Art und Weise mit Führungs- und Tragrollen ausgestattet, die hier nicht eigens mit einem Bezugszeichen versehen sind und an verschiedenen Flächen des Profils der Tragschiene 34 abrollen. Um den Transportwagen 24 anzutreiben, kann eine an dem Transportwagen 24 angeordnete Antriebseinrichtung 38 vorgesehen sein. Hierzu kann das Fahrwerk 26 beispielsweise eine Antriebsrolle 40 aufweisen, die durch einen von dem Fahrwerk 26 mitgeführten Elektromotor 42 angetrieben werden kann. In einer alternativen, nicht eigens gezeigten Ausgestaltung des Transportsystems 20, kann auch eine zentrale Antriebseinrichtung für alle Transportwagen 24 vorhanden sein. Beispielsweise kann hierfür eine Kette entlang der Tragschiene 34 dienen, welche in Mitnehmer an den Transportwagen 24 eingreift und diese mitschleppt.

Es kommen auch anders konstruierte Hängebahnsysteme in Frage, wie sie an und für sich bekannt sind. Auch Nicht-Hängebahnsysteme kommen in Betracht, bei denen beispielsweise Schienen zu beiden Seiten des Tauchbeckens 16 verlaufen, auf denen der Transportwagen 24 mit einem entsprechend ausgebildeten Fahrwerk ablaufen kann. Auch derartige Transportsysteme für Tauchanlagen sind an und für sich bekannt.

Mit Hilfe der Verstelleinrichtung 30 kann die Befestigungseinrichtung 28 einerseits in vertikaler Richtung angehoben oder abgesenkt werden und andererseits um eine Drehachse 44 gedreht werden, welche horizontal und beim vorliegenden Ausführungsbeispiel senkrecht zur Transportrichtung 36 verläuft. Beim vorliegenden Ausführungsbeispiel ist die Verstelleinrichtung 30 als Teleskopeinrichtung 46 mit einem in vertikaler Richtung aus- und einfahrbaren Teleskoparm 48 ausgebildet, welcher die Befestigungseinrichtung 28 an seinem unteren Ende drehbar lagert.

Entsprechend vorhandene Antriebe für den Teleskoparm 48 und die Verdrehung der Befestigungseinrichtung 28 sind in den Figuren nicht eigens gezeigt.

Insgesamt können die Befestigungseinrichtung 28 und der daran befestigte Gegenstand 12 eine Bewegung durchführen, die durch eine Überlagerung einer horizontalen Linearbewegung, einer vertikalen Linearbewegung und einer Drehung um die Drehachse 44 hervorgerufen wird. Dies bedeutet nicht, dass diese Überlagerung der drei Bewegungen stets durchgeführt werden muss, es können auch jeweils nur eine oder nur zwei dieser Bewegungsmöglichkeiten gleichzeitig ausgeschöpft werden.

Die Befestigungseinrichtung 28 weist eine Haltestruktur 50 für ein oder mehrere Gegenstände 12 auf. Gemäß den in den Figuren gezeigten Ausführungsbeispielen kann die Drehachse 44 der Befestigungseinrichtung 28 mit einer drehbaren Quertraverse der Haltestruktur 50 zusammenfallen.

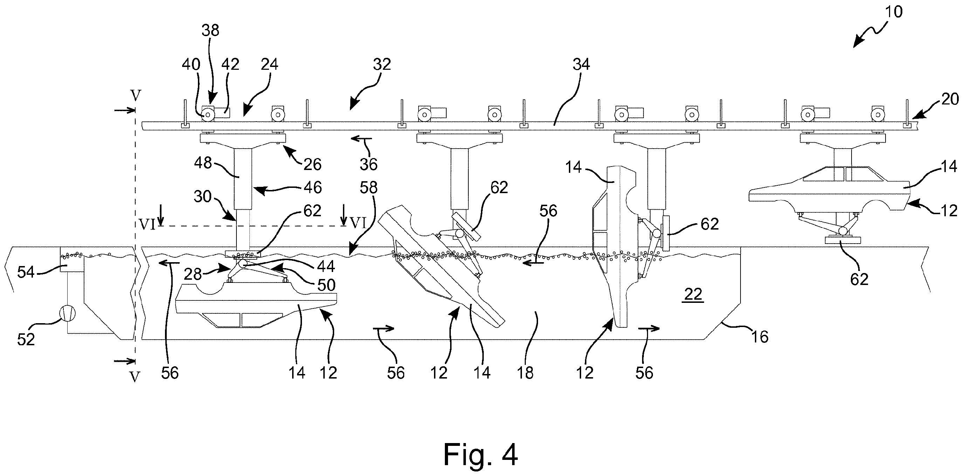

Anhand der Figuren 1 und 4 wird nachfolgend der Ablauf eines Tauchgangs in der Tauchlackieranlage 10 beschrieben.

Die zu lackierenden Fahrzeugkarosserien 14 werden in einer im Wesentlichen horizontalen Ausrichtung an das Tauchbecken 16 heranbewegt. Die Fahrzeugkarosserien 14 bewegen sich dabei in Richtung des Pfeils 36. Die Befestigungseinrichtung 28 und die Fahrzeugkarosserie 14 befinden sich dabei in einer obersten Position; der Teleskoparm 48 ist eingefahren. In dieser obersten Position befindet sich beispielsweise die in den Figuren 1 und 4 jeweils ganz rechts gezeigte Fahrzeugkarosserie 14.

Wenn sich der Transportwagen 24 der auf der Eintrittsseite befindlichen Stirnwand des Tauchbeckens 16 nähert, wird der Teleskoparm 48 ausgefahren, wodurch die Befestigungseinrichtung 28 und die daran befestigte Fahrzeugkarosserie 14 abgesenkt werden. Sobald die Front der Fahrzeugkarosserie 14 über die Stirnwand des Tauchbeckens 16 hinaus über die Behandlungsflüssigkeit 18 ragt, werden gleichzeitig die Befestigungseinrichtung 28 und die Fahrzeugkarosserie 14 um die Drehachse 44 verdreht. In diesem Bereich ist also die Gesamtbewegung der Fahrzeugkarosserie 14 als die oben angesprochene Überlagerung dreier Bewegungen zu verstehen, nämlich der horizontalen Linearbewegung in Transportrichtung 36 entlang der Tragschiene 34, der vertikalen Linearbewegung, hier entlang der Längsachse des Teleskoparms 48 und der Drehbewegung um die Drehachse 44, die in der Sicht der Figuren 1 und 4 gegen den Uhrzeigersinn erfolgt. Dabei "wickelt" sich die Fahrzeugkarosserie 14 über die eingangsseitige Stirnwand des Tauchbeckens 16 und taucht in die Behandlungsflüssigkeit 18 ein.

Unter fortgesetztem Absenken und weiterer Drehung der Befestigungseinrichtung 28 bzw. der Fahrzeugkarosserie 14 um die Drehachse 44 wird schließlich eine Position erreicht, in der die Fahrzeugkarosserie 14 "Dach unten" und somit "auf dem Rücken" liegt. In dieser Position befindet sich beispielsweise die in den Figuren 1 und 4 jeweils ganz links gezeigte Fahrzeugkarosserie 14.

Spätestens in dem Moment, in dem die Fahrzeugkarosserie 14 vollständig "auf dem Rücken" und damit wieder horizontal liegt, ist die Fahrzeugkarosserie 14 vollständig in die Behandlungsflüssigkeit 18 eingetaucht. Die Fahrzeugkarosserie 14 wird zunächst in dieser Position mit Hilfe des Transportwagens 24 weiter durch das Tauchbecken 16 gefördert, bis sie näher an die ausgangsseitige Stirnwand des Tauchbeckens 16 herangerückt ist.

Sodann beginnt der Austauchvorgang der Fahrzeugkarosserie 14, der sich wiederum als Überlagerung von drei Bewegungen darstellt, nämlich der horizontalen Linearbewegung in Transportrichtung 36, einer Vertikalbewegung nach oben entlang der Längsachse des Teleskoparms 48 und der Drehbewegung um die Drehachse 44. Dabei "wickelt" sich die Fahrzeugkarosserie 14 durch Weiterverdrehen um die Drehachse 44 gegen den Uhrzeigersinn unter Einfahren des Teleskoparms 48 und damit unter einer Aufwärtsbewegung der Befestigungseinrichtung 28 über die ausgangsseitige Stirnwand des Tauchbeckens 16 hinweg, bis dann erneut in Transportrichtung 36 hinter dem Tauchbecken 16 eine horizontale Position der frisch flüssigkeitsbehandelten, im Falle eines Lacks der frisch lackierten, Fahrzeugkarosserie 14 erreicht ist. Dieser Austauchvorgang ist nicht gesondert gezeigt. Alternativ kann bei dem hier beschriebenen Austauchvorgang die Drehbewegung um die Drehachse 44 auch in Richtung des Uhrzeigersinns erfolgen bis erneut eine horizontale Position der frisch flüssigkeitsbehandelten Fahrzeugkarosserie 14 erreicht ist.

Beim Eintauchen des Gegenstands 12 bzw. der Fahrzeugkarosserie 14 in das Tauchbad können Luftblasen entstehen, beispielsweise durch das Austreten von Luft aus Hohlräumen. Ebenso ist es möglich, dass Luftblasen beim Austauchen aus dem Tauchbad entstehen. Die Luftblasen sammeln sich insbesondere an der Oberfläche 58 der Behandlungsflüssigkeit 18 und können dort zu einer unerwünschten Schaumbildung führen. Auch bei der eigentlichen Tauchbehandlung, insbesondere beim Beschichten des Gegenstands 12, kann Schaum entstehen und sich an der Oberfläche 58 der Behandlungsflüssigkeit 18 sammeln, insbesondere kann beim Beschichten Mikroschaum gebildet werden.

Die Behandlungsflüssigkeit 18 im Tauchbecken 16 wird mittels einer Pumpe 52 umgewälzt. Die Umwälzströmung der Behandlungsflüssigkeit 18 im Tauchbecken 16 ist in den Figuren 1 und 4 durch Pfeile 56 angedeutet. Durch das Umwälzen der Behandlungsflüssigkeit 18 werden Luftblasen und Schaum an der Oberfläche 58 der Behandlungsflüssigkeit 18 mit der Umwälzströmung in der durch den Pfeil 36 angedeuteten Transportrichtung der Gegenstände 12 zu einem Überlaufbereich 54 des Tauchbeckens 16 transportiert. Vorzugsweise wird von dem Überlaufbereich 54 zumindest ein Teil der Behandlungsflüssigkeit 18 mittels der Pumpe 52 unter Zwischenschaltung ein oder mehrerer nicht näher dargestellter, geeigneter Filtervorrichtungen zurück in das Tauchbecken 16 geleitet. Durch das Umwälzen kann auch eine Sedimentation von Koagulat bzw. Feststoffen am Beckenboden reduziert bzw. vermindert werden.

Anhand der Figuren 1 bis 6 werden nachfolgend verschiedene Ausführungsbeispiele von Abstreifvorrichtungen 60a, 60b und 62 beschrieben. Mit Hilfe derartiger Abstreifvorrichtungen 60a, 60b bzw. 62 kann Schaum von der Behandlungsflüssigkeit 18 im Tauchbecken 16 abgestreift werden.

In Figur 1 sind zwei Abstreifvorrichtungen 60a und 60b gezeigt, die jeweils eine Halteeinrichtung 66 und ein Abstreifelement 68 aufweisen. Die Abstreifvorrichtungen 60a 60b sind derart angeordnet, dass die mittels des Transportsystems 20 bewegten Gegenstände 12 im Tauchbecken 16 unterhalb der Abstreifvorrichtungen 60a und 60b vorbei geführt werden.

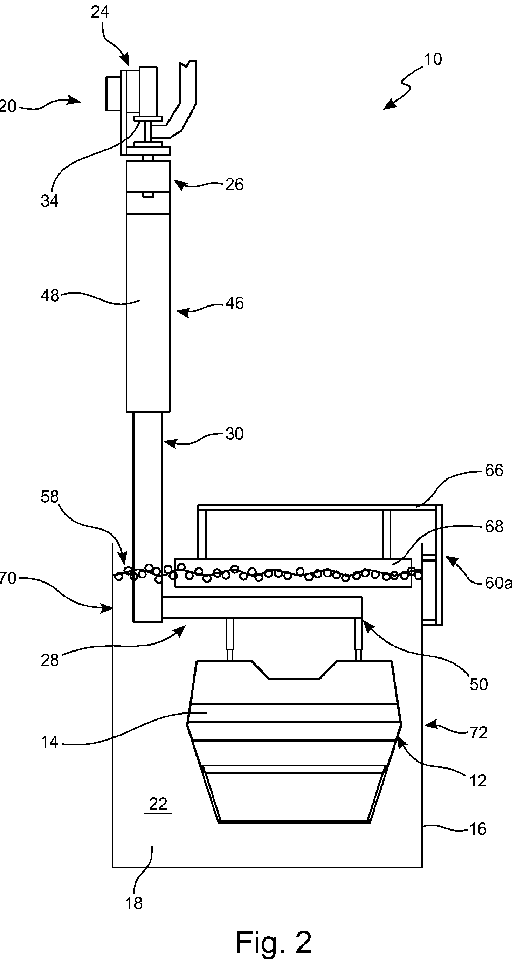

Wie insbesondere Figur 2 veranschaulicht, ist die Halteeinrichtung 66 der Abstreifvorrichtung 60a im gezeigten Beispiel an einer Längsseite 72 des Tauchbeckens 16 befestigt. Die gegenüberliegende Längsseite 70 des Tauchbeckens 16 weist einen Abstand zur Abstreifvorrichtung 60a und zu deren Abstreifelement 68 auf. Dieser Abstand ermöglicht, dass der Transportwagen 24, im gezeigten Beispiel die Teleskopeinrichtung 46 des Transportwagens 24, seitlich an der Abstreifvorrichtung 60a und deren Abstreifelement 68 vorbei bewegt werden kann. Zumindest ein Teil der Befestigungseinrichtung 28 des Transportwagens 24 wird dabei unterhalb des Abstreifelements 68 der Abstreifvorrichtung 60a vorbei bewegt.

Im gezeigten Ausführungsbeispiel weist auch die Längsseite 72 des Tauchbeckens 16, an der die Halteeinrichtung 66 der Abstreifvorrichtung 60a befestigt ist, einen Abstand zur Abstreifvorrichtung 60a und zu deren Abstreifelement 68 auf. Gemäß einer alternativen, nicht näherdargestellten Ausgestaltung kann das Abstreifelement 68 der Abstreifvorrichtung 60a bzw. dessen Strömungsfläche 64 einseitig bis an den inneren Rand des Tauchbeckens 16 geführt werden.

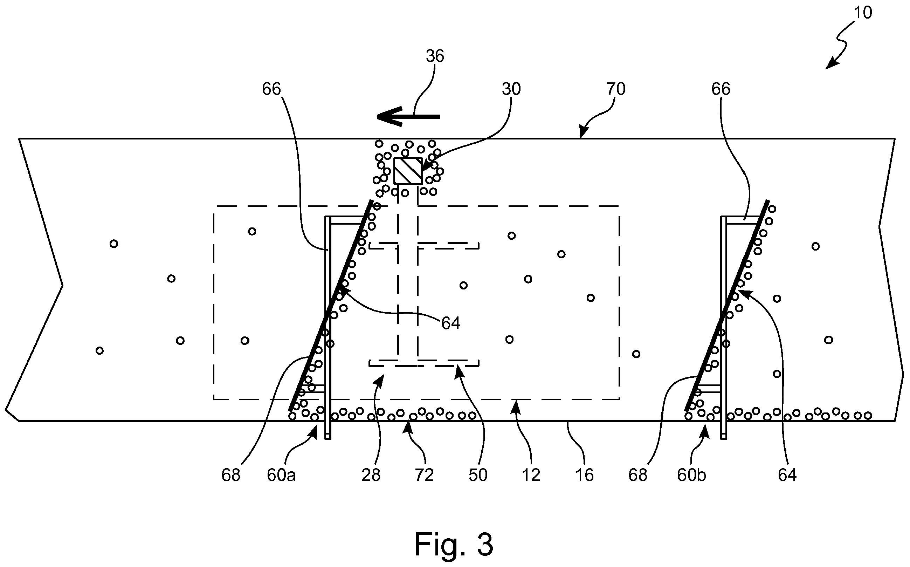

Figur 3 zeigt beispielhaft die in einem schrägen Winkel zum Rand bzw. die in einem schrägen Winkel zu den Längsseiten 70, 72 des Tauchbeckens 16 ausgerichteten Abstreifelemente 68 der Abstreifvorrichtungen 60a und 60b. Die Abstreifelemente 68 sind dabei jeweils an einer Halteeinrichtung 66 der Abstreifvorrichtung 60a bzw. 60b angeordnet. Wenn die Strömungsfläche 64 eines Abstreifelements 68 in einem schrägen Winkel zum Rand des Tauchbeckens 16 angeordnet ist, wird der Schaum entlang der Strömungsfläche 64 zum Rand des Tauchbeckens 16 gelenkt und somit weg von dem Bereich, in dem der Gegenstand 12 aus dem Tauchbecken 16 auftaucht.

Die gezeigten Abstreifvorrichtungen 60a, 60b können beispielsweise stationär am Tauchbecken 16 angeordnet sein.

Die Abstreifvorrichtungen 60a bzw. 60b mit dem mindestens einen Abstreifelement 68 und der Halteeinrichtung 66 für das Abstreifelement 68 können derart klappbar und/oder schwenkbar ausgebildet sein, dass das Abstreifelement 68 und die Halteeinrichtung 66 aus dem Oberflächenbereich des Tauchbeckens 16 heraus bewegt werden können.

In einer weiteren Ausgestaltung können die ein oder mehreren Abstreifvorrichtungen 60a bzw. 60b nach Art eines Rakels entlang der Oberfläche 58 beweglich ausgebildet sein. Wenn das Abstreifelement 68 beispielsweise entgegen der Richtung des Pfeils 36 bewegt wird, kann in besonders effektiver Weise Schaum von der Oberfläche 58 der Behandlungsflüssigkeit 18 entfernt werden. Im Anschluss an diese Bewegung ist jeweils eine Rückstellbewegung erforderlich.

Die Figuren 4 bis 6 zeigen eine Abstreifvorrichtung 62, die von einem Transportwagen 24 des Transportsystems 20 der Tauchbehandlungsanlage 10 mitbewegt wird. Die Abstreifvorrichtung 62 ist dabei vorzugsweise derart angeordnet, dass sie gemeinsam mit der Befestigungseinrichtung 28 für den Gegenstand 12 bewegt wird. Derart kann die Bewegung der Abstreifvorrichtung 62 an die Bewegung des an der Befestigungseinrichtung 28 befestigten Gegenstands 12 gekoppelt werden. Gemäß dem in den Figuren 4 bis 6 gezeigten Beispiel ist die Abstreifvorrichtung 62 mit der Befestigungseinrichtung 28 gemeinsam drehbar und gemeinsam höhenverstellbar verbunden. Das Abstreifelement 68 der Abstreifvorrichtung 62 kann dabei beispielsweise mit der Haltestruktur 50 der Befestigungseinrichtung 28 verbunden sein. Gemäß dem gezeigten Beispiel haben die Abstreifvorrichtung 62 und die Haltestruktur 50 der Befestigungseinrichtung 28 eine gemeinsame Drehachse 44.

Wie insbesondere Figur 4 veranschaulicht, befindet sich die Abstreifvorrichtung 62 gemäß dem gezeigten Ausführungsbeispiel insbesondere dann im Bereich der Oberfläche 58 der Behandlungsflüssigkeit 18, wenn sich die Fahrzeugkarosserie 14 in einer Position befindet, in der sie "Dach unten" und somit "auf dem Rücken" liegt.

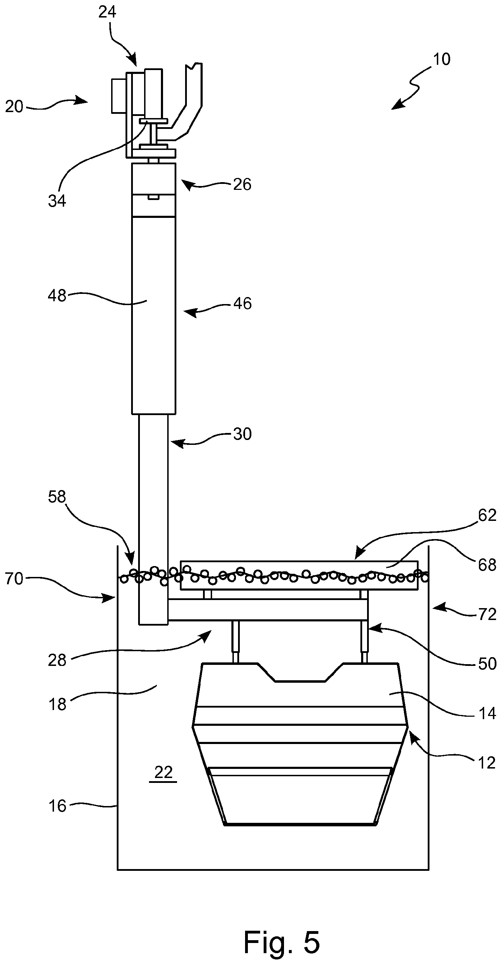

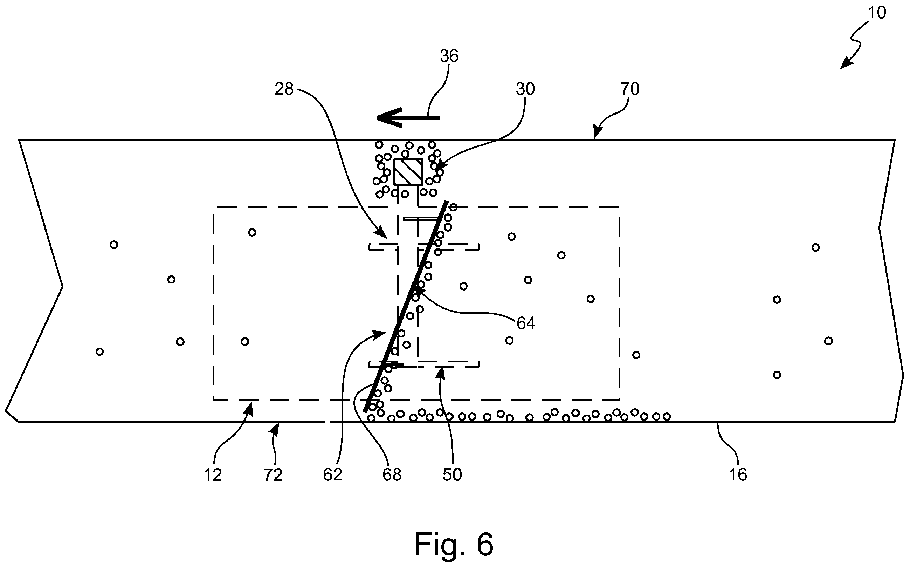

Figur 6 veranschaulicht, dass die Abstreifvorrichtung 62 auch bei diesem Ausführungsbeispiel in einem schrägen Winkel zum Rand bzw. in einem schrägen Winkel zu den Längsseiten 70, 72 (siehe auch Figur 5) des Tauchbeckens 16 ausgerichtet sein kann. Derart wird der Schaum entlang der Strömungsfläche 64 zum Rand des Tauchbeckens 16 gelenkt und somit weg von dem Bereich, in dem der Gegenstand 12 aus dem Tauchbecken 16 auftaucht.

Insbesondere aber nicht nur bei der in den Figuren 4 bis 6 veranschaulichten Abstreifvorrichtung 62 kann es von Vorteil sein, wenn der Gegenstand 12 für eine gewisse Zeitspanne in einer eingetauchten Position verweilt und sich beispielsweise eine Fahrzeugkarosserie 14 für eine gewisse Zeitspanne in einer Position befindet, in der sie "Dach unten" und somit "auf dem Rücken" liegt. Während dieser Zeitspanne kann Schaum mittels der Abstreifvorrichtung 60a, 60b bzw. 62 vom Austauchbereich des Gegenstands 12 bzw. der Fahrzeugkarosserie 14 wegtransportiert werden.

Durch den Einsatz der anhand der Figuren 1 bis 6 beispielhaft beschriebenen Abstreifvorrichtungen 60a, 60b, 62 wird Schaum an den Rand des Tauchbeckens 16 gelenkt. Der so am Rand des Tauchbeckens 16 gesammelte Schaum kann dann beispielsweise mit der Umlaufströmung zum Überlaufbereich 54 treiben. Derart kann der nicht näher dargestellte Bereich des Tauchbeckens 16, in dem Gegenstände 12 bzw. Fahrzeugkarosserien austauchen, zumindest weitgehend von Schaum an der Oberfläche der Behandlungsflüssigkeit 18 freigehalten werden. Alternativ oder zusätzlich können entlang mindestens einer der Längsseiten 70, 72 des Tauchbeckens 16 in den Figuren nicht näher dargestellte Überläufe in Form von ein oder mehreren Überlaufvorrichtungen vorgesehen sein, in die Schaum abfließen kann. Weiterhin alternativ oder zusätzlich können in ein oder mehreren Bereichen des Rands des Tauchbeckens, vorzugsweise an mindestens einer der Längsseiten 70, 72 des Tauchbeckens 16, ein oder mehrere Saugvorrichtungen zum Absaugen von Schaum vorgesehen sein. Derart kann Schaum beispielsweise bereichsweise abgesaugt werden.

Gemäß einer weiteren Ausgestaltung kann die Abstreifvorrichtung 60a, 60b bzw. 62, insbesondere das Abstreifelement 68 der Abstreifvorrichtung 60a, 60b bzw. 62, pflugförmig ausgebildet sein. Dies ist in den Figuren nicht näher dargestellt.

Durch die in den Figuren 3 und 6 gezeigte Anordnung der Strömungsfläche 64 in einem schrägen Winkel zum Rand des Tauchbeckens 16 entsteht an der Oberfläche 58 der Behandlungsflüssigkeit 18 eine Strömungskomponente in Randrichtung. Eine weitere Strömungskomponente entspricht der Strömungsrichtung der Umwälzströmung an der Oberfläche 58 der Behandlungsflüssigkeit 18. Alternativ oder zusätzlich kann die Sammlung von Schaum am Rand des Tauchbeckens 16 durch nicht näher dargestellte Blasdüsen unterstütz werden, die vorzugsweise zumindest teilweise in einem Bereich oberhalb der Oberfläche 58 angeordnet sein können. Die Blasdüsen können verbunden mit der Abstreifvorrichtung 60a, 60b bzw. 62 oder getrennt von dieser angeordnet sein.

Anders als in den gezeigten Beispielen dargestellt, kann die Strömungsfläche 64 gekurvt ausgebildet sein. Möglich sind auch andere Geometrien der Strömungsfläche 64, beispielsweise mit einem Winkel der Strömungsfläche 64 zum Rand des Tauchbeckens 16, der über die Länge der Strömungsfläche 64 unterschiedlich ist.

Die Unterkante der Strömungsfläche 64 (siehe auch Figuren 3 und 6) kann unterhalb, auf Höhe bzw. oberhalb des Spiegels der Behandlungsflüssigkeit 18 liegen. Es ist möglich, dass die Höhe der Strömungsfläche 64 verstellt werden kann, beispielsweise indem eine entsprechende Stellvorrichtung für das Abstreifelement 68 vorgesehen wird.

Die Abstreifvorrichtung 60a, 60b bzw. 62 kann derart ausgebildet sein, dass der Winkel der mindestens einen Strömungsfläche 64 (siehe auch Figuren 3 und 6) zum Rand des Tauchbeckens 16 verstellt werden kann. Alternativ oder zusätzlich kann die Abstreifvorrichtung 60a, 60b bzw. 62 derart ausgebildet sein, dass der Winkel der mindestens einen Strömungsfläche 64 zur Oberfläche 58 der Behandlungsflüssigkeit 18 verstellt werden kann.

Ein Gedanke, welcher der Erfindung zugrunde liegt, lässt sich wie folgt zusammenfassen: Die vorliegende Erfindung betrifft eine Tauchbehandlungsanlage 10 zum Behandeln von Gegenständen 12, insbesondere zum Behandeln von Fahrzeugkarosserien 14, wobei die Tauchbehandlungsanlage 10 mindestens ein Tauchbecken 16 mit einer Behandlungsflüssigkeit 18 und ein Transportsystem 20 aufweist, wobei zu behandelnde Gegenstände 12 vollständig oder teilweise in die Behandlungsflüssigkeit 18 eingetaucht werden können, wobei das Transportsystem 20 die zu behandelnden Gegenstände 12 an das Tauchbecken 16 heran, vollständig oder teilweise in den Innenraum 22 des Tauchbeckens 16 hinein, aus dem Tauchbecken heraus und von diesem weg bewegen kann, wobei die Tauchbehandlungsanlage 10 mindestens eine Abstreifvorrichtung 60a, 60b, 62 aufweist, mit Hilfe derer Schaum von der Behandlungsflüssigkeit 18 abgestreift werden kann. Die Erfindung betrifft auch ein Verfahren zum Behandeln von Gegenständen 12, insbesondere zum Behandeln von Fahrzeugkarosserien 14, bei dem zu behandelnde Gegenstände 12 vollständig oder teilweise in eine Behandlungsflüssigkeit 18 eingetaucht werden, mit welcher mindestens ein Tauchbecken 16 gefüllt ist, wobei an einer Oberfläche 58 der Behandlungsflüssigkeit 18 vorhandener Schaum mittels mindestens einer Abstreifvorrichtung 60a, 60b, 62 abgestreift wird. Erfindungsgemäß kann auf der Behandlungsflüssigkeit 18 schwimmender Schaum derart abgeführt werden, dass Qualitätseinbußen an der behandelten Oberfläche des Gegenstands 12 durch Anhaften von Schaum beim Austauchen des Gegenstands 12 aus der Behandlungsflüssigkeit 18 zumindest weitgehend vermieden werden.

Mittels der Abstreifvorrichtung 60a, 60b, 62 kann Schaum beispielsweise an mindestens eine der Längsseiten 70, 72 des Tauchbeckens geleitet werden. Von dort kann der Schaum dann in einen Überlauf geleitet werden ohne den Austauchbereich des Gegenstands 12 bzw. der Fahrzeugkarosserie 14 zu kontaminieren. Auf diese Weise kann zumindest weitgehend vermieden werden, dass Schaum beim Austauchen einer Fahrzeugkarosserie 14 auf Karosserieflächen anhaftet und dort beispielsweise in die Beschichtungsoberfläche einbrennt bzw. Ränder hinterlässt, die unter Umständen noch bis zum Decklack sichtbar sind.

## Patentansprüche

1. Tauchbehandlungsanlage zum Behandeln von Gegenständen (12), insbesondere zum Behandeln von Fahrzeugkarosserien (14), mit
a) mindestens einem Tauchbecken (16), welches mit einer Behandlungsflüssigkeit (18) füllbar ist, in welche zu behandelnde Gegenstände (12) vollständig oder teilweise eingetaucht werden können, und mit
b) einem Transportsystem (20), welches die zu behandelnden Gegenstände (12) an das Tauchbecken (16) heran, vollständig oder teilweise in den Innenraum (22) des Tauchbeckens (16) hinein, aus dem Tauchbecken (16) heraus und von diesem weg bewegen kann, wobei
c) das Transportsystem (20) mit mindestens einer Befestigungseinrichtung (28) ausgestattet ist, an der wenigstens ein Gegenstand (12) befestigbar ist,
**dadurch gekennzeichnet, dass**
d) mindestens eine Abstreifvorrichtung (60a, 60b, 62) vorgesehen ist, um Schaum von der Behandlungsflüssigkeit (18) im Tauchbecken (16) abzustreifen.

2. Tauchbehandlungsanlage nach Anspruch 1, **dadurch gekennzeichnet, dass** die Abstreifvorrichtung (60a, 60b) mindestens ein Abstreifelement (68) mit mindestens einer Strömungsfläche (64) aufweist.

3. Tauchbehandlungsanlage nach Anspruch 1 oder 2, **dadurch gekennzeichnet, dass** die Abstreifvorrichtung (60a, 60b) stationär in der Tauchbehandlungsanlage (10) angeordnet ist.

4. Tauchbehandlungsanlage nach Anspruch 3, **dadurch gekennzeichnet, dass** die Abstreifvorrichtung (60a, 60b) klappbar und/oder schwenkbar ausgebildet ist.

5. Tauchbehandlungsanlage nach Anspruch 1 oder 2, **dadurch gekennzeichnet, dass** die Abstreifvorrichtung (62) mittels des Transportsystems (20) beweglich in der Tauchbehandlungsanlage (10) angeordnet ist.

6. Tauchbehandlungsanlage nach Anspruch 5, **dadurch gekennzeichnet, dass** mindestens eine Abstreifvorrichtung (62) derart angeordnet ist, dass sie gemeinsam mit der mindestens einen Befestigungseinrichtung (28) des Transportsystems (20) bewegt wird.

7. Tauchbehandlungsanlage nach einem der Ansprüche 2 bis 6, **dadurch gekennzeichnet, dass** die mindestens eine Strömungsfläche (64) höhenverstellbar ist.

8. Tauchbehandlungsanlage nach einem der Ansprüche 2 bis 7, **dadurch gekennzeichnet, dass** die mindestens eine Strömungsfläche (64) in einem schrägen Winkel zum Rand des Tauchbeckens (16) angeordnet ist.

9. Tauchbehandlungsanlage nach einem der Ansprüche 2 bis 8, **dadurch gekennzeichnet, dass** der Winkel der mindestens einen Strömungsfläche (64) zum Rand des Tauchbeckens (16) verstellbar ist.

10. Tauchbehandlungsanlage nach einem der Ansprüche 1 bis 9, **dadurch gekennzeichnet, dass** die Abstreifvorrichtung (60a, 60b, 62) pflugförmig ausgebildet ist.

11. Tauchbehandlungsanlage nach einem der Ansprüche 1 bis 10, **dadurch gekennzeichnet, dass** an mindestens einer Längsseite (70, 72) des Tauchbeckens (16) ein oder mehrere Saugvorrichtungen und/oder ein oder mehrere Überlaufvorrichtungen angeordnet ist.

12. Verfahren zum Behandeln von Gegenständen (12), insbesondere zum Behandeln von Fahrzeugkarosserien (14), bei dem zu behandelnde Gegenstände (12) vollständig oder teilweise in eine Behandlungsflüssigkeit (18) eingetaucht werden, mit welcher mindestens ein Tauchbecken (16) gefüllt ist,
**dadurch gekennzeichnet, dass**
an einer Oberfläche (58) der Behandlungsflüssigkeit (18) vorhandener Schaum mittels mindestens einer Abstreifvorrichtung (60a, 60b, 62) abgestreift wird.

13. Verfahren nach Anspruch 12, **dadurch gekennzeichnet, dass** die zu behandelnden Gegenstände (12) mit einem Transportsystem (20) an das Tauchbecken (16) heran, vollständig oder teilweise in den Innenraum (22) des Tauchbeckens (16) hinein, aus dem Tauchbecken (16) heraus und von diesem weg bewegt werden, und dass die Gegenstände (12) eine Zeitspanne im Innenraum (22) des Tauchbeckens (16) verweilen, bevor sie wieder aus diesem heraus bewegt werden.

14. Verfahren nach Anspruch 12 oder 13, **dadurch gekennzeichnet, dass** die Abstreifvorrichtung (62) und eine Befestigungseinrichtung (28) des Transportsystems (20), an der wenigstens ein Gegenstand (12) befestigt ist, gemeinsam bewegt werden.

15. Verfahren nach Anspruch 12 oder 13, **dadurch gekennzeichnet, dass** die Gegenstände (12) unterhalb der Abstreifvorrichtung (60a, 60b) an dieser vorbei bewegt werden.
